# EUROPEAN PATENT SPECIFICATION

(11) **EP 2 633 759 B1**
(45) Date of publication and mention of the grant of the patent: **23.09.2015**
(21) Application number: 13156937.8
(22) Date of filing: 27.02.2013
(51) Int. Cl.: A21C 1/06, B01F 3/12, B01F 7/02, B01F 7/04, B01F 15/02, B01F 7/00

(54) **Centrifugal mixer of foodstuffs with improved nebulization of the liquid portion**
Zentrifugalmischer für Lebensmittel mit verbesserter Zerstäubung des flüssigen Anteils
Mélangeur centrifuge des denrées alimentaires avec une nébulisation améliorée de la partie liquide

(30) Priority: 28.02.2012 IT MI20120302
(43) Date of publication of application: 04.09.2013
(73) Proprietor: Fava S.p.A., 44042 Cento FE (IT)
(72) Inventor: Fava, Enrico, 44042 CENTO (FE) (IT); Storci, Anzio, 43044 COLLECCHIO (PR) (IT)
(74) Representative: Lotti, Giorgio

(56) References cited:
- EP-A2- 1 914 056
- DE-A1- 19 917 056
- DE-A1-102005 025 016
- DE-U1- 9 105 027
- US-A- 5 795 060

## Description

The present invention refers to a centrifugal mixer of foodstuffs with improved nebulization of the liquid portion.

In particular, the mixer of the present invention can be used in the field of pasta production where from raw materials in solid form, such as wheat powders or semolina flours or flour or alike, and in liquid form, such as water, egg or water with additives, a mixture is made intended to be worked to make the end product. In the rest of the description the device according to the present invention will be defined by the term mixer and not by the term "pre-mixer" used in the prior art to indicate devices with analogous functions.

Such a different nomenclature has been chosen to emphasise the fact that the device according to the invention, thanks to its high efficiency, can also be installed in systems not provided with further mixers.

Of course, there is nothing to prevent the device according to the present invention from being installed even in systems equipped with other mixers downstream of the device object of the present application. Currently, the pre-centrifugal mixer of foodstuffs recognised by the market as the device currently most efficient is made by the same Applicant of the present application according to the teachings of prior patent IT1288031.

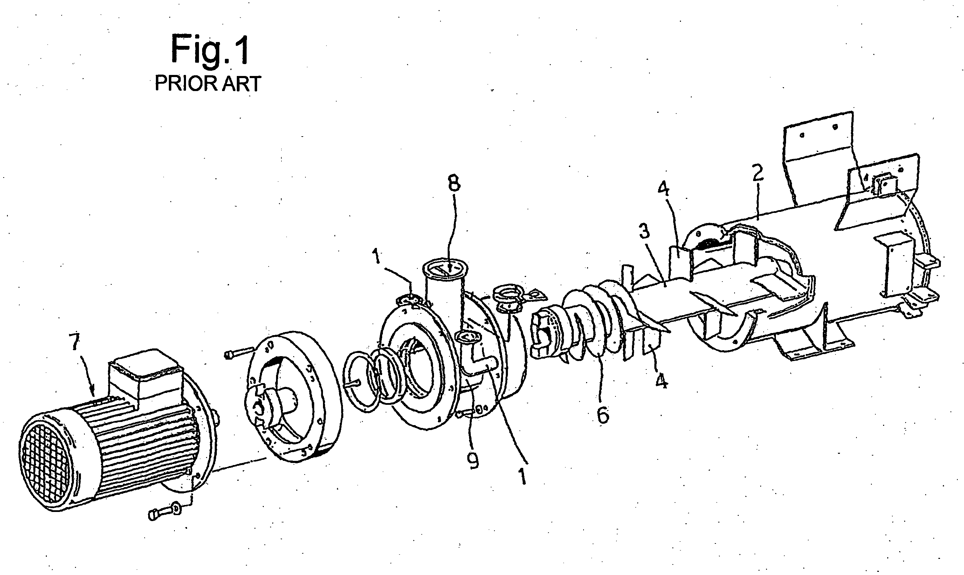

As can be seen in figure 1, where a figure of IT1288031 is shown, such a known pre-centrifugal mixer is of the type comprising:
- a shaft provided with a plurality of vanes;
- a cylinder for at least partially housing the shaft provided with at least one inlet of the solid portion and with at least one inlet of the liquid portion;
in which the inlet for the solid portion is positioned substantially at the mixing shaft and the inlet of the liquid portion is positioned in an intermediate position between the inlet of the solid portion and the internal wall of the cylinder.

In such a device the centrifugal effect due to the rotation of the shaft and to the presence of the vanes causes the expansion of the powdered product towards the lateral internal wall of the cylindrical chamber. Since the inlet of the liquid portion is positioned in an intermediate position between the inlet of the solid portion and the internal wall of the cylinder, the powdered product impacts upon the liquid one during its expansion thus making the end mixture homogeneous.

In particular, in such a known device the first mixing vanes formed on the shaft perform the dual function of expanding the powdered solid product, as well as of making a sort of rough nebulization of the liquid product.

Experience has demonstrated that a machine produced according to IT1288031, which discloses a centrifugal mixer according to the preamble of claim 1, makes the mixture composed of semolina and water in an optimal manner, whereas unfortunately in the case of mixtures of wheat flour and water the same results are not obtained in terms of homogeneity of the mixed product.

Such a difference is to be found in the different structural characteristics of semolina and of wheat flour where, in particular, wheat flour has a lower specific weight and greater hygroscopic capacity, i.e. capacity to absorb water.

By fully analysing the flour mixing process in known machines according to IT1288031, it can be seen that the water injected into the cylinder is unfortunately entirely absorbed by the first particles of flour encountered in the mixer making them too wet and, consequently, the remaining ones too dry.

As a consequence, at the outlet of the mixer there is a lot of fine powder in suspension and a mixture that is wetted in a non-homogeneous way is dispensed.

The purpose of the present invention is to make an alternative centrifugal mixer of foodstuffs to the known ones that is able to solve the aforementioned drawbacks in an extremely simple, cost-effective and particularly functional manner.

Another purpose is to make a centrifugal mixer of foodstuffs that is able to nebulize the liquid portion in an optimal manner so that it is distributed homogeneously even on products, like wheat flour, with a low specific weight and high hygroscopic capacity.

A further purpose is to make a centrifugal mixer of foodstuffs that is also able to expand the solid portion in an optimal manner so as to more homogeneously absorb the water already nebulized in the cylinder.

These purposes, according to the present invention, are accomplished by making a centrifugal mixer of foodstuffs with improved nebulization of the liquid portion as outlined in claim 1.

In particular, in the mixer of the present invention the Applicant has taken steps to divide the functions of advancement of the mixture, of nebulization of the liquid portion and of expansion of the solid portion into three distinct components operating independently in different portions of the cylinder.

Contrarily, according to IT1288031, all of the aforementioned functions are carried out by the mixing vanes that take care very well of the advancement of the mixture, less well of the expansion of the solid product and even less well, if not in a coarse manner, of the nebulization of the water.

Indeed, in such a prior art rather than nebulization it would be correct to talk of division into successive compact pieces of the flow of water.

As will be made clearer by the description, the fact of having divided the functions of advancing the mixture, of nebulizing the water and of expansion of the flour into three distinct components operating independently in different areas of the cylinder has made it possible to obtain a mixture that is optimal from the point of view of homogeneity also with the use of wheat flour or of other elements having low specific weight and high hygroscopic capacity.

The characteristics and advantages of a centrifugal mixer of foodstuffs with improved nebulization of the liquid portion according to the present invention will become clearer from the following description, given as an example and not for limiting purposes, referring to the attached schematic drawings, in which:
- figure 1 is a view of a pre-centrifugal mixer of foodstuffs according to the prior art;

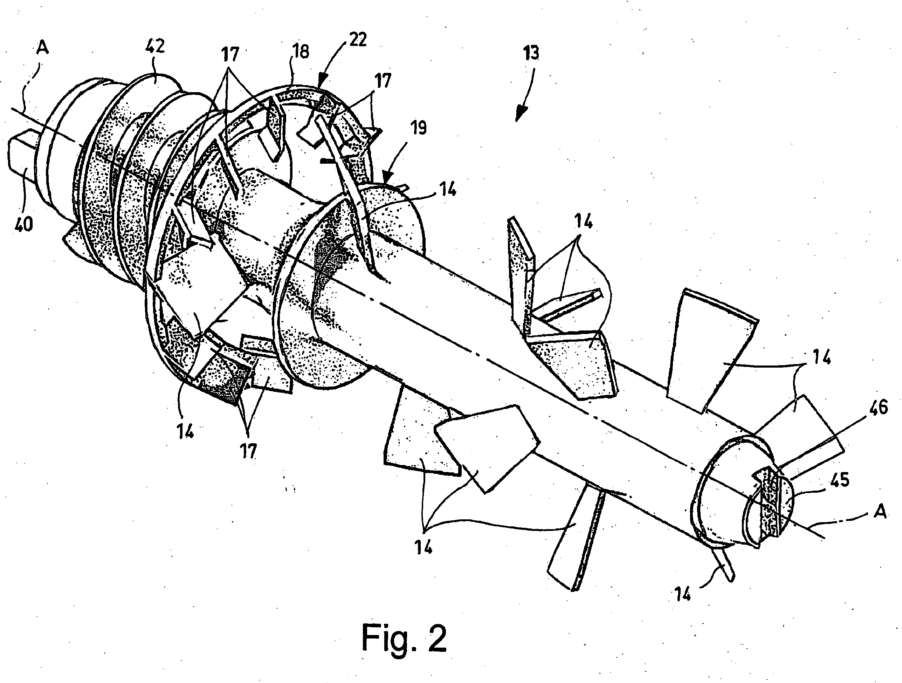

- figure 2 is a perspective view of the mixing shaft of the centrifugal mixer of foodstuffs with improved nebulization according to the present invention;

- figure 3 is a side view of the mixing shaft of figure 2;

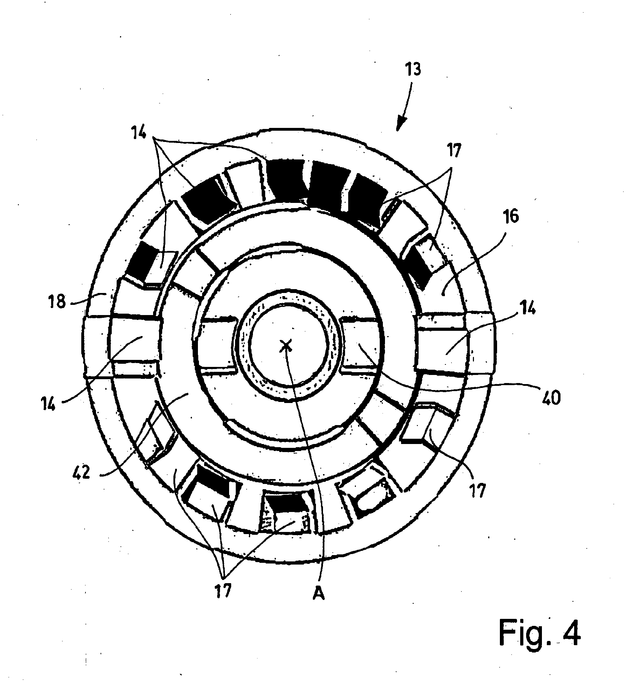

- figure 4 is a rear view of the mixing shaft of figure 2;

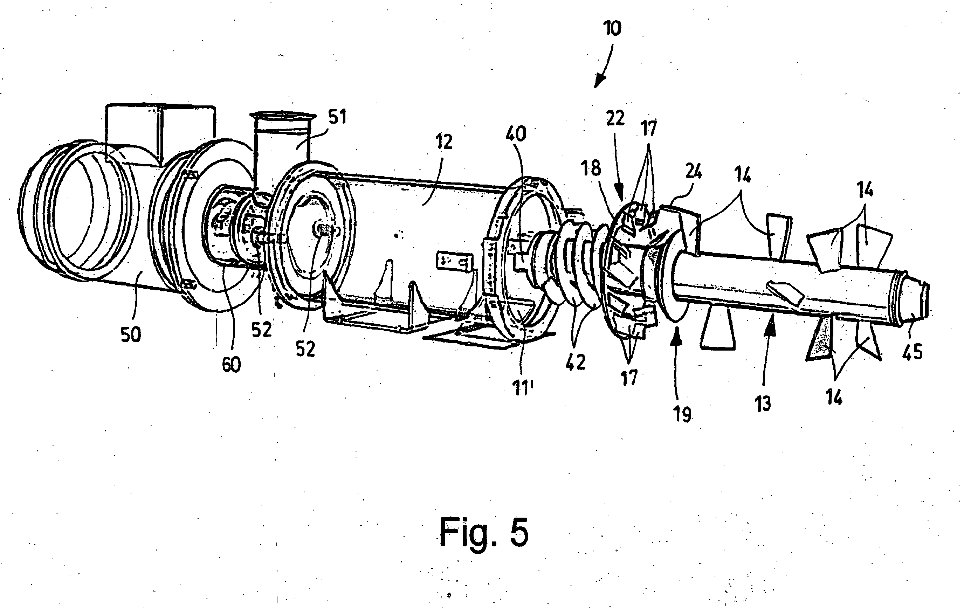

- figure 5 is an exploded perspective view of the mixing shaft of the centrifugal mixer of foodstuffs with improved nebulization according to the present invention;

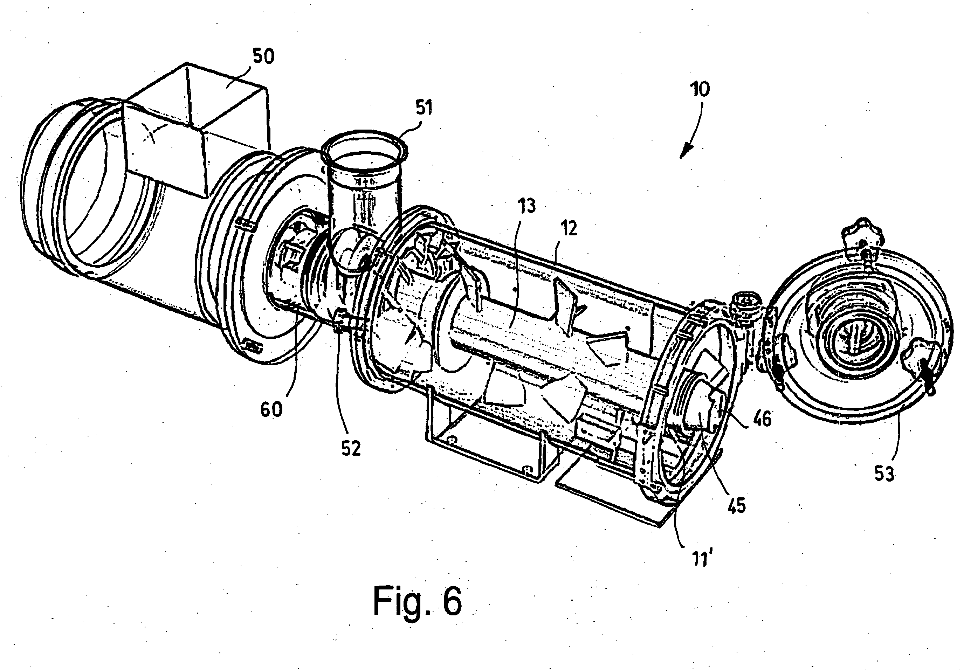

- figure 6 is a view of the mixer of figure 5 with insertion door of the shaft open;
- figure 7 is a sectioned side view of the mixer of figure 6 with insertion door of the shaft closed; and
- figure 8 shows an enlarged detail of the openings for introducing the solid portion and the liquid portion. With reference to the figures, an example embodiment of a centrifugal mixer of foodstuffs with improved nebulization of the liquid portion according to the present invention is shown with 10.

Such a centrifugal mixer 10 is suitable for making a homogeneous mixture of a solid portion in the form of powders or flours, like semolina flour or wheat flour, with a liquid portion, such as water, and comprises:
- a mixing shaft 13 with axis A equipped with a plurality of mixing vanes 14; and
- a cylinder 12 for at least partially housing the mixing shaft 13 where the liquid portion and the solid portion are introduced.

As known, the rotation motion is transmitted to the shaft 13 by a motorization 50 connected to the base end 40 of the shaft 13, said base end 40 being that from which extends an Archimedean screw 42 with one or more advancing starts of the solid portion towards the mixing vanes 14.

The Archimedean screw portion 42 is housed in a duct 60 of smaller diameter with respect to the cylinder 12 provided with an upper opening 51 for insertion of the solid portion.

Downstream of the Archimedean screw portion 42 the mixing shaft 13 with the vanes 14 is in the cylinder 12 and in such a transit area from the duct 60 to the cylinder 12 there being obtained the at least one inlet 15 of the solid portion pushed by the Archimedean screw 42 and the at least one inlet 11 of the liquid portion supplied from outside of the mixer by means of tubes possibly joined to the cylinder 12 with suitable flanges.

At the opposite end of the cylinder 12 with respect to such inlets 11 and 15 a lower discharge opening 11' of the mixture made is provided.

As known, the inlet 15 of the solid portion, i.e. the outlet area of the Archimedean screw 42 into the cylinder 12, is positioned at the mixing shaft 13 whereas the at least one inlet 11 of the liquid portion is positioned in an intermediate position between the inlet 15 of the solid portion and the internal wall 20 of the cylinder 12.

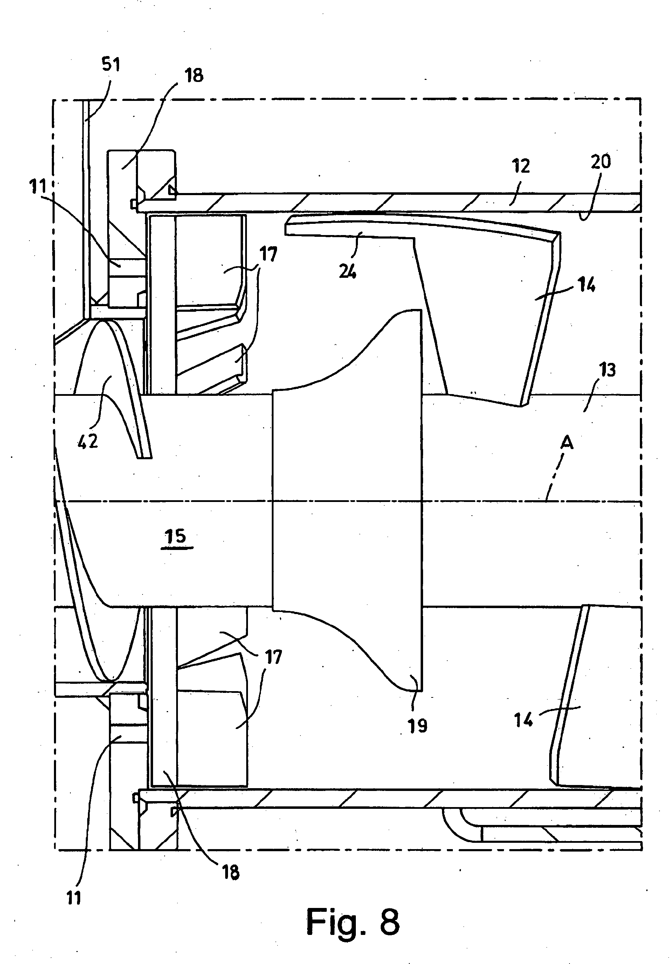

Figure 8 shows the relative arrangement of the inlets of the solid portion 15 and of the liquid portion 11 into the cylinder 12 with respect to the axis A of the shaft 13.

According to the prior art, once the raw materials have been introduced into the cylinder, the functions of advancing the mixture, of nebulizing the water and of expansion of the flour are performed by the first vanes formed of the shaft.

Contrarily, according to the present invention, the mixer comprises nebulizing means 22 configured specifically to carry out just such a function and thus configured to interact only with the liquid portion injected into the cylinder 12.

In order to obtain this effect, such nebulizing means 22 are positioned in the cylinder directly facing the at least one inlet 11 of the liquid portion and are in a more external position from the axis A with respect to the at least one inlet 15 of the solid portion.

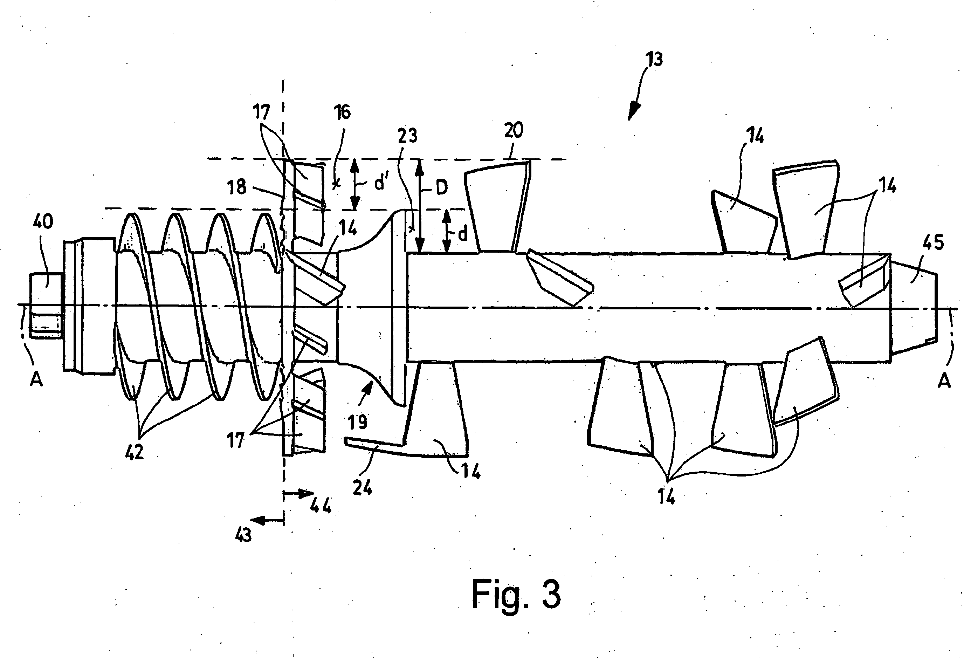

As shown in figure 3, the space D present between the shaft 13 and the inner surface 20 of the cylinder is divided into two concentric areas, the first 23 identifies a circular ring d around the shaft not engaged by the nebulizing means 22 and in which the solid product advances freely, and a second external area 16 that identifies an external circular ring d' in which nebulizing means 22 operate and where the liquid portion is injected.

In this way, the nebulization of the liquid portion is not influenced by the expansion of the solid portion and vice-versa.

At least two or a plurality of inlets 11 of the liquid portion are provided, all facing the circular ring 16 outside of the inlet area 15 of the solid portion.

The nebulizing means 22 in turn comprise a plurality of rotating nebulization vanes 17 placed directly facing the inlets 11 where such nebulizing vanes 17 are supported by a common base ring 18.

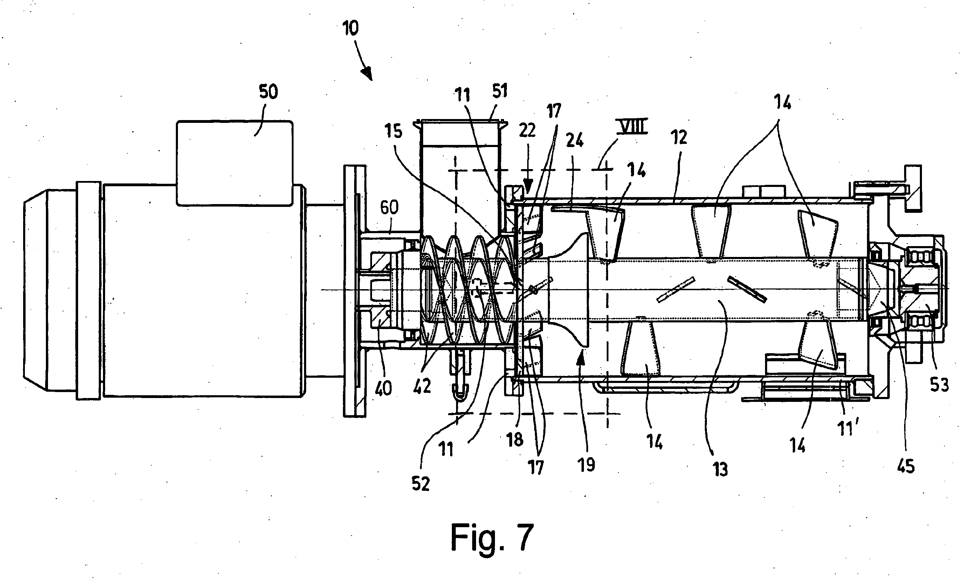

As can be seen in figure 7, the base ring 18 is substantially in lateral contact with the internal wall 20 of the cylinder 12 and the nebulizing vanes 17 project from the base ring 18 towards the inlets 11 of the liquid portion.

According to the example shown, the base ring 18 is integral with the shaft 13 by means of two mixing vanes 14.

The vanes 17 are configured so as to nebulize the liquid portion and comprise at least two portions in succession from one another and inclined in space differently.

As stated earlier, the nebulizing means 22 operate in a circular ring 16 outside of the inlet 15 of the solid portion, which is indeed introduced in a circular ring 23 that is more inner with respect to the axis A of the shaft 13.

In such a circular ring 23 that is more inner with respect to the axis A of the shaft 13 expansion means 19 of the solid portion act independently with respect to the nebulizing means 22.

The independence of the expansion means 19 with respect to the nebulizing means 22 is such that it is possible to provide embodiments of shafts 13 where there are just the former 19, shafts 13 in which there are just the latter 22, or, in the best case scenario, shafts in which there are both as shown in the figures.

The expansion means 19 of the solid portion are arranged in the cylinder 12 downstream of the nebulizing means 22 associated with the shaft 13 facing the inlet 15 of the solid portion in a position closer to the axis A with respect to the at least one inlet 11 of the liquid portion.

According to the example shown, such expansion means 19 can comprise a cone-shaped element 19 keyed or mounted on the shaft 13.

In order for the advancing of the mixture that has already gone into contact with the wall 20 of the cylinder 12 not to be slowed down by the cone 19, which actually makes a discontinuity in the arrangement of the vanes 14 along the shaft 13, the mixing vane 14 arranged directly downstream of the cone element 19 is equipped with a peripheral extension 24 that extends above the cone element 19.

In this way the continuous presence of the vanes 14, or rather of the working end portions of the vanes, is restored along the entire wall 20 of the cylinder 12. Finally, a further advantage is the fact that the shaft 13 is of the removable and replaceable type.

In this way it is possible to replace the shafts currently in use in systems with the new shafts 13 to obtain the advantages described, where such new shafts 13 comprise in succession, from upstream to downstream:
- a base portion 40 for engaging with a motorization 50;
- an Archimedean screw 42 having at least one start formed along a first tract 43 of the shaft 13 for receiving and advancing the solid portion;
- a plurality of mixing vanes 14 formed along a second tract 44 of the shaft 13 downstream of the first tract 43 up to the end portion 45 of the shaft 13;
- nebulizing means 22 of the liquid portion integral with the shaft 13 arranged at the start of the second tract 44 in a position more external with respect to the Archimedean screw 42; and/or
- expansion means 19 of the solid portion keyed onto the shaft 13 downstream of the nebulizing means 22 and facing the Archimedean screw 42.

It is totally easy to understand how the centrifugal mixer of foodstuffs with improved nebulization of the liquid portion object of the invention operates.

As known, in order to make a homogeneous mixture of a solid portion in the form of powders or flours with a liquid portion, it is necessary to carry out the steps of:
- supplying the solid portion and the liquid portion into a centrifugal mixer provided with a rotary shaft 13 with vanes 14;
- mixing the solid and liquid portions advancing along the centrifugal mixer 10;
- expelling the mixture from the centrifugal mixer 10.

Between the step of supplying and that of mixing two intermediate steps are provided, which are independent from each other - respectively for nebulizing the liquid portion and for expanding the solid portion.

Alternatively, it is also possible to provide just one of the aforementioned intermediate steps.

Finally, in order to give a final contribution of homogenisation between the step of mixing and that of expelling, there is provided an intermediate step of at least partially inverting the motion of the mixture advancing in the centrifugal mixer 10.

It has thus been seen that a centrifugal mixer of foodstuffs with improved nebulization of the liquid portion according to the present invention achieves the purposes highlighted earlier.

Indeed, the fact that the functions of advancing the mixture, of nebulizing the water and of expansion of the flour has been delegated to autonomous devices that are independent from one another has made it possible to optimise such three parameters, making it possible to have homogeneous mixtures even based on solid products with low specific weight and high hygroscopic capacity, like for example wheat flour.

The centrifugal mixer of foodstuffs with improved nebulization of the liquid portion of the present invention thus conceived can undergo numerous modifications and variants, all of which are covered by the same invention as defined in the claims.

## Claims

1. Centrifugal mixer (10) of foodstuffs suitable for realizing an homogeneous mixture of a solid portion in the form of powders or flours with a liquid portion, said mixer (10) comprising:
- a mixing shaft (13) having an axis (A) provided with a plurality of mixing vanes (14);
- a cylinder (12) for housing, at least partially, said mixing shaft (13) provided, at a first end, with at least an inlet (15) of said solid portion and with at least an inlet (11) of said liquid portion, and at a second end with an outlet opening (11') for said mixture;
- said at least an inlet (15) for said solid portion being substantially placed at said mixing shaft (13) and said at least an inlet (11) of said liquid portion being placed in an intermediate position between said at least an inlet (15) of said solid portion and the internal wall (20) of said cylinder (12);
being moreover provided with means for nebulizing (22) said liquid portion arranged in said cylinder (12); said nebulizing means are placed directly facing said at least an inlet (11) of said liquid portion in a position more external from said axis (A) with respect to said at least an inlet (15) of said solid portion, said centrifugal mixer (10) comprising at least two inlets (11) of said liquid portion placed in an intermediate position between said at least an inlet (15) of said solid portion and the internal wall of said cylinder (12), said nebulizing means being placed directly facing said at least two inlets (11) of said liquid portion along a circular ring (16) centered on said shaft (13) and outside said at least an inlet (15) of said solid portion, said nebulizing means comprising a plurality of rotating nebulizing vanes (17) placed directly facing said at least two inlets (11) of said liquid portion, **characterized in that** said nebulizing vanes (17) are supported by a common base ring (18).

2. Centrifugal mixer (10) according to claim 1 **characterized in that** said base ring (18) is substantially in lateral contact with said internal wall (20) of said cylinder (12), said nebulizing vanes (17) protruding from said base ring (18) towards said at least two inlets (11) of said liquid portion.

3. Centrifugal mixer (10) according to claim 1 or 2 **characterized in that** said base ring (18) is integral with said shaft (13).

4. Centrifugal mixer (10) according to any claim 1-3 **characterized in that** said nebulizing vanes (17) comprise at least two portions inclined to each other in the space in a different way.

5. Centrifugal mixer (10) according to any preceding Claims **characterized in that** it comprises expansion means (19) of said solid portion arranged in said cylinder (13) downstream of said nebulizing means (22), said expansion means (19) being associated with said shaft (13) facing said at least an inlet (15) of said solid portion in a position closer to said axis (A) with respect to said at least an inlet (11) of said liquid portion.

6. Centrifugal mixer (10) according to claim 5 **characterized in that** it comprises at least two inlets (15) of said solid portion placed substantially at said mixing shaft (13), said expansion means (19) being placed directly facing said at least two inlets (15) of said solid portion along a circular ring (23) keyed on said shaft (13) inside said at least an inlet (11) of said liquid portion.

7. Centrifugal mixer (10) according to claim 6 **characterized in that** the expansion means (19) comprise a cone-shaped element (19).

8. Centrifugal mixer (10) according to claim 7 **characterized in that** it comprises a mixing vane (14) arranged directly downstream of said cone element (19) provided with a peripheral extension (24) which extends above said cone element (19).

## Patentansprüche

1. Zentrifugalmischer (10) für Lebensmittel, der sich zum Herstellen eines homogenen Gemischs aus einem festen Anteil in Form von Pulvern oder Mehlen mit einem flüssigen Anteil eignet, wobei dieser Mischer (10) Folgendes umfasst:
- eine mit einer Vielzahl von Mischflügeln (14) versehene Mischwelle (13) mit einer Achse (A);
- einen Zylinder (12) zum zumindest teilweisen Aufnehmen der Mischwelle (13), der an einem ersten Ende mit mindestens einem Einlass (15) für den festen Anteil und mit mindestens einem Einlass (11) für den flüssigen Anteil und an einem zweiten Ende mit einer Auslassöffnung (11') für das Gemisch versehen ist;
- wobei sich der mindestens eine Einlass (15) für den festen Anteil im Wesentlichen bei der Mischwelle (13) befindet und sich der mindestens eine Einlass (11) für den flüssigen Anteil in einer Zwischenposition zwischen dem mindestens einen Einlass (15) für den festen Anteil und der Innenwand (20) des Zylinders (12) befindet;
wobei er ferner mit Mitteln zum Zerstäuben (22) des flüssigen Anteils versehen ist, die in dem Zylinder (12) angeordnet sind; wobei diese Zerstäubungsmittel dem mindestens einen Einlass (11) für den flüssigen Anteil direkt zugewandt in einer in Bezug auf den mindestens einen Einlass (15) für den festen Anteil weiter außen von der Achse (A) liegenden Position angeordnet sind, wobei der Zentrifugalmischer (10) mindestens zwei Einlässe (11) für den flüssigen Anteil umfasst, die sich in einer Zwischenposition zwischen dem mindestens einen Einlass (15) für den festen Anteil und der Innenwand des Zylinders (12) befinden, wobei die Zerstäubungsmittel den mindestens zwei Einlässen (11) für den flüssigen Anteil direkt zugewandt entlang einem Kreisring (16) angeordnet sind, der auf der Welle (13) zentriert und außerhalb des mindestens einen Einlasses (15) für den festen Anteil ist, wobei die Zerstäubungsmittel eine Vielzahl von drehenden Zerstäubungsflügeln (17) umfassen, die den mindestens zwei Einlässen (11) für den flüssigen Anteil direkt zugewandt angeordnet sind, **dadurch gekennzeichnet, dass** die Zerstäubungsflügel (17) von einem gewöhnlichen Basisring (18) getragen werden.

2. Zentrifugalmischer (10) nach Anspruch 1, **dadurch gekennzeichnet, dass** sich der Basisring (18) im Wesentlichen in einem seitlichen Kontakt mit der Innenwand (20) des Zylinders (12) befindet, wobei die Zerstäubungsflügel (17) von diesem Basisring (18) zu den mindestens zwei Einlässen (11) für den flüssigen Anteil hin vorstehen.

3. Zentrifugalmischer (10) nach Anspruch 1 oder 2, **dadurch gekennzeichnet, dass** der Basisring (18) fest mit der Welle (13) verbunden ist.

4. Zentrifugalmischer (10) nach einem der Ansprüche von 1 bis 3, **dadurch gekennzeichnet, dass** die Zerstäubungsflügel (17) mindestens zwei Abschnitte umfassen, die im Raum in einer unterschiedlichen Weise zueinander geneigt sind.

5. Zentrifugalmischer (10) nach einem der vorhergehenden Ansprüche, **dadurch gekennzeichnet, dass** er Expansionsmittel (19) für den festen Anteil umfasst, die im Zylinder (13) stromabwärts der Zerstäubungsmittel (22) angeordnet sind, wobei diese Expansionsmittel (19) mit der Welle (13) verbunden und dem mindestens einen Einlass (15) für den festen Anteil in einer Position zugewandt sind, die gegenüber dem mindestens einen Einlass (11) für den flüssigen Anteil näher bei der Achse (A) ist.

6. Zentrifugalmischer (10) nach Anspruch 5, **dadurch gekennzeichnet, dass** er mindestens zwei Einlässe (15) für den festen Anteil umfasst, die sich im Wesentlichen bei der Mischwelle (13) befinden, wobei die Expansionsmittel (19) den mindestens zwei Einlässen (15) für den festen Anteil direkt zugewandt entlang einem Kreisring (23) angeordnet sind, der in dem mindestens einen Einlass (11) für den flüssigen Anteil auf die Welle (13) aufgezogen ist.

7. Zentrifugalmischer (10) nach Anspruch 6, **dadurch gekennzeichnet, dass** die Expansionsmittel (19) ein kegelförmiges Element (19) umfassen.

8. Zentrifugalmischer (10) nach Anspruch 7, **dadurch gekennzeichnet, dass** er einen direkt stromabwärts des Kegelelements (19) angeordneten Mischflügel (14) umfasst, der mit einer Randverlängerung (24) versehen ist, die sich über dem Kegelelement (19) erstreckt.

## Revendications

1. Mélangeur centrifuge (10) de denrées alimentaires, adapté pour réaliser un mélange homogène d'une portion solide sous la forme de poudres ou de farines avec une portion liquide, ledit mélangeur (10) comprenant :
- un arbre mélangeur (13) ayant un axe (A) muni d'une pluralité de pales mélangeuses (14) ;
- un cylindre (12) pour loger, au moins partiellement, ledit arbre mélangeur (13), pourvu, à une première extrémité, d'au moins une entrée (15) de ladite portion solide et d'au moins une entrée (11) de ladite portion liquide, et, à une deuxième extrémité, d'une ouverture de sortie (11') pour ledit mélange ;
- ladite au moins une entrée (15) pour ladite portion solide étant placée sensiblement au niveau dudit arbre mélangeur (13) et ladite au moins une entrée (11) de ladite portion liquide étant placée dans une position intermédiaire entre ladite au moins une entrée (15) pour ladite portion solide et la paroi interne (20) dudit cylindre (12) ;
étant muni par ailleurs de moyens pour nébuliser (22) ladite portion liquide, disposés dans ledit cylindre (12) ; lesdits moyens de nébulisation sont placés faisant face directement à ladite au moins une entrée (11) de ladite portion liquide dans une position plus externe vis-à-vis dudit axe (A) par rapport à ladite au moins une entrée (15) pour ladite portion solide, ledit mélangeur centrifuge (10) comprenant au moins deux entrées (11) de ladite portion liquide placées dans une position intermédiaire entre ladite au moins une entrée (15) pour ladite portion solide et la paroi interne dudit cylindre (12), lesdits moyens de nébulisation sont placés faisant face directement à lesdites au moins deux entrées (11) de ladite portion liquide le long d'un anneau circulaire (16) centré sur ledit arbre (13) et à l'extérieur de ladite au moins une entrée (15) pour ladite portion solide, lesdits moyens de nébulisation comprenant une pluralité de pales de nébulisation tournantes (17) placées faisant face directement auxdites au moins deux entrées (11) de ladite portion liquide, **caractérisé en ce que** lesdites pales de nébulisation (17) sont supportées par un anneau de base commun (18).

2. Mélangeur centrifuge (10) selon la revendication 1, **caractérisé en ce que** ledit anneau de base (18) est sensiblement en contact latéral avec ladite paroi interne (20) dudit cylindre (12), lesdites pales de nébulisation (17) faisant saillie à partir dudit anneau de base (18) vers lesdites au moins deux entrées (11) de ladite portion liquide.

3. Mélangeur centrifuge (10) selon la revendication 1 ou 2, **caractérisé en ce que** ledit anneau de base (18) est solidaire dudit arbre (13).

4. Mélangeur centrifuge (10) selon l'une quelconque des revendications 1 à 3, **caractérisé en ce que** lesdites pales de nébulisation (17) comprennent au moins deux portions inclinées l'une par rapport à l'autre dans l'espace d'une manière différente.

5. Mélangeur centrifuge (10) selon l'une quelconque des revendications précédentes, **caractérisé en ce qu'**il comprend des moyens de dilatation (19) de ladite portion solide agencés dans ledit cylindre (13) en aval desdits moyens de nébulisation (22), lesdits moyens de dilatation (19) étant associés audit arbre (13) faisant face à ladite au moins une entrée (15) pour ladite portion solide dans un position plus proche dudit arbre (A) par rapport à ladite au moins une entrée (11) de ladite portion liquide.

6. Mélangeur centrifuge (10) selon la revendication 5, **caractérisé en ce qu'**il comprend au moins deux entrées (15) pour ladite portion solide placées sensiblement au niveau dudit arbre mélangeur (13), lesdits moyens de dilatation (19) étant placés faisant face directement auxdites au moins deux entrées (15) pour ladite portion solide le long d'un anneau circulaire (23) claveté sur ledit arbre (13) à l'intérieur de ladite au moins une entrée (11) de ladite portion liquide.

7. Mélangeur centrifuge (10) selon la revendication 6, **caractérisé en ce que** les moyens de dilatation (19) comprennent un élément de forme conique (19).

8. Mélangeur centrifuge (10) selon la revendication 7, **caractérisé en ce qu'**il comprend une pale de mélange (14) disposée directement en aval dudit élément conique (19), munie d'une extension périphérique (24) qui s'étend au-dessus dudit élément conique (19).
